# EUROPÄISCHE PATENTSCHRIFT

(11) **EP 3 299 195 B1**
(45) Veröffentlichungstag und Bekanntmachung des Hinweises auf die Patenterteilung: **04.11.2020**
(21) Anmeldenummer: 17193097.7
(22) Anmeldetag: 26.09.2017
(51) Int. Cl.: B60H 1/00, B61D 27/00

(54) **VERFAHREN ZUR REGELUNG EINER KLIMAANLAGE FÜR EIN FAHRZEUG**
METHOD TO CONTROL AN AIR CONDITIONING DEVICE FOR A VEHICLE
PROCÉDÉ DE RÉGULATION D'UNE INSTALLATION DE CLIMATISATION POUR UN VÉHICULE

(30) Priorität: 27.09.2016 DE 102016118217
(43) Veröffentlichungstag der Anmeldung: 28.03.2018
(73) Patentinhaber: Bombardier Transportation GmbH, 10785 Berlin (DE)
(72) Erfinder: Thomas, Falk, 16761 Hennigsdorf (DE); Salender, Maximilian, 39326 Wolmirstedt (DE)
(74) Vertreter: Zimmermann & Partner Patentanwälte mbB

(56) Entgegenhaltungen:
- DE-A1- 10 316 294
- DE-A1-102005 031 846
- DE-A1-102008 031 714
- DE-A1-102012 211 672
- DE-A1-102014 113 649
- DE-U1-202004 011 248
- US-A- 5 647 793
- US-A1- 2012 214 394

## Beschreibung

Die Erfindung betrifft ein Verfahren zur Regelung einer Klimaanlage für ein Fahrzeug, eine Klimaanlage für ein Fahrzeug und ein Fahrzeug mit einer Klimaanlage.

Bei Fahrzeugen, z.B. Schienenfahrzeugen, werden Klimaanlagen eingesetzt, um in Räumen für Fahrgäste und/oder Personal Komfortbedingungen bezüglich einer Temperatur und einer Luftfeuchte herzustellen. Als Übertragungsmittel für die Temperatur und die Luftfeuchte wird in der Regel Luft verwendet.

Üblicherweise erfolgt eine Klimatisierung, indem ein Zuluftgebläse eines Klimageräts Mischluft aus Umluft und Außenluft in das Klimagerät einsaugt, wobei diese Mischluft anschließend im Klimagerät gekühlt oder aufgeheizt und dann als Zuluft einem zu klimatisierenden Raum zugeführt wird. Ein Fortluftvolumenstrom, dessen Betrag einem Zuluftvolumenstrom entspricht, verlässt den zu klimatisierenden Raum über separate Fortluftöffnungen am Fahrzeug.

Zur Gewährleistung einer vorgegebenen Raumluftqualität kann es erforderlich sein, einen Mindestwert für einen Außenluftvolumenstrom sicher zu stellen. Dieser kann konstant sein, z.B. für Führerräume, oder in Abhängigkeit von einer Außentemperatur eingestellt werden, z.B. für Fahrgasträume. Das Verhältnis von Außenluft zu Umluft wird mittels Klappeneinrichtungen im Fahrzeug eingestellt, wobei die Einstellung der Klappeneinrichtungen während eines Systemtestes bei einem Fahrzeugstillstand vorgenommen wird. Üblicherweise wird dabei der Außenluftstrom über eine Außenluftklappe angedrosselt.

Aufgrund von Druckdifferenzen zwischen einer vor dem Klimagerät angeordneten Mischluftkammer und einem Außenluftkanal bzw. einem Umluftkanal ergibt sich normalerweise ein Außenluftstrom in Richtung zum Klimagerät hin.

Aufgrund von Druckänderungen an einer Außenluftansaugung und einem Fortluftaustritt kann es im Fahrbetrieb zu unerwünschten Änderungen des Betrags des Außenluftvolumenstromes kommen. Bei Überdruck an der Außenluftansaugung kommt es zu einem erhöhten Betrag des Außenluftvolumenstroms, der einen erhöhten Leistungsbedarf der Klimaanlage nach sich ziehen kann. Sinkt der Druck an der Außenluftansaugung im Fahrbetrieb dagegen deutlich ab, kommt es zu einer Änderung des Mischungsverhältnisses zwischen der Außenluft und der Umluft. Dies kann bei ungünstigen Druckverhältnissen dazu führen, dass der Außenluftvolumenstrom unter den geforderten Mindestwert absinkt. Dabei verschlechtert sich die Raumluftqualität im zu klimatisierenden Raum deutlich Im Extremfall tritt Umluft durch eine Außenluftklappe der Außenluftansaugung in die Umgebung des Fahrzeugs aus. Dabei tritt ungereinigte Luft über den Forlulftaustritt in das Fahrzeug ein. Dies kann zu Problemen bei der Einhaltung hygienischer Anforderungen führen.

Die Druckschrift EP 2 678 176 B1 beschreibt ein Klimaanlagensystem für ein Fahrzeug, wobei in dem Klimaanlagensystem drei Betriebszustände möglich sind: ein Frischluftbetrieb, ein Umluftbetrieb und ein Mischluftbetrieb. Bei einem Mischluftbetrieb wird mit Hilfe einer Druckmessung in einem Frischluftkanal bzw. einem Umluftkanal und einer Frischluftklappe ein vorgegebenes Mischungsverhältnis zwischen einer Frischluftmenge und einer Umluftmenge eingestellt. Dabei ist eine Umluftklappe vollständig geöffnet. Nachteilig ist hierbei, dass ein Mischungsverhältnis zwischen der Frischluftmenge und der Umluftmenge vorgegeben ist und bei jeder Geschwindigkeit des Fahrzeugs konstant bleibt. Außerdem weist die Klimaanlage einen hohen Leistungsbedarf auf.

Die Druckschrift DE 198 47 504 C1 offenbart ein Verfahren zur Steuerung von Außenluft- und Umluftstrom in einer raumlufttechnischen Anlage für ein Fahrzeug. Entsprechend der Besetzung des Fahrzeugs wird ein bestimmter Außenluftstrom angesaugt. Zusätzlich kann ein Umluftstrom aus dem Innenraum zugeführt werden Beide Ströme werden gemischt, wobei ein Mindestaußenluftanteil z.B. in Abhängigkeit von einer Raumlufttemperatur oder einer Zahl von Personen in einem Raum festgelegt wird. Nachteilig ist dabei, dass die Luftqualität durch eine Vielzahl von physikalischen Größen bestimmt wird.

Der Erfindung liegt daher die Aufgabe zu Grunde ein Verfahren zur Regelung einer Klimaanlage bereit zu stellen, bei dem eine vorgegebene Luftqualität einfach eingehalten wird, ein Leistungsbedarf der Klimaanlage minimiert wird und ein beliebiges Mischungsverhältnis von einem Außenluftstrom und einem Umluftstrom eingestellt wird.

Diese Aufgabe wird erfindungsgemäß mit einem Verfahren zur Regelung einer Klimaanlage für ein Fahrzeug nach Anspruch 1 gelöst. Weiterhin wird die Aufgabe mit einer Klimaanlage für ein Fahrzeug zur Durchführung des Verfahrens nach Anspruch 10 gelöst. Vorteilhafte Ausgestaltungen der Erfindung sind in den Unteransprüchen enthalten.

Erfindungsgemäß besteht die Lösung der Aufgabe in einem Verfahren zur Regelung einer Klimaanlage für ein Fahrzeug, bei dem mindestens ein Mischluftstrom in mindestens ein Klimagerät einströmt, wobei sich der Mischluftstrom in einem Mischluftkanal befindet, und mindestens ein Zuluftstrom aus dem Klimagerät ausströmt, wobei mindestens ein Strömungs-Istwert in mindestens einem Außenluftkanal ermittelt wird und mindestens eine Regelungseinheit in Abhängigkeit von dem Strömungs-Istwert mindestens einen ersten Öffnungsgrad für mindestens eine Außenluftklappeneinheit stufenlos einstellt, wobei durch eine Veränderung des ersten Öffnungsgrads der Außenluftklappeneinheit die in den Mischluftkanal einströmende Größe des Außenluftstroms eingestellt wird. Die Regelungseinheit stellt mindestens einen zweiten Öffnungsgrad für mindestens eine Umluftklappeneinheit unabhängig von dem ersten Öffnungsgrad ein, wobei durch eine Veränderung des zweiten Öffnungsgrads der Umluftklappeneinheit die in den Mischluftkanal einströmende Größe des Umluftstromes eingestellt wird. Die Regelungseinheit stellt auch den zweiten Öffnungsgrad für die Umluftklappeneinheit in Abhängigkeit von dem Strömungs-Istwert stufenlos ein, und mindestens eine Kombination eines ersten Öffnungsgrades mit einem zweiten Öffnungsgrad stellt einen Strömungs-istwert im Außenluftkanal her, der einem vorgegebenen Strömungs-Sollwert des Außenluftstroms entspricht.

Der Vorteil dieses Verfahrens besteht darin, dass eine Beeinflussung des Strömungs-Istwerts im Außenluftkanal mit Hilfe des ersten Öffnungsgrades der Außenluftklappeneinheit und des zweiten Öffnungsgrades der Umluftklappeneinheit erfolgt. Die Beeinflussung erfolgt mit Hilfe einer getrennten Regelung der Außenluftklappeneinheit und der Umluftklappeneinheit. Eine Verringerung des Strömungs-Istwerts unter einen vorgegebenen Minimalwert wird verhindert. Dadurch wird eine vorgegebene Luftqualität eingehalten. Außerdem wird verhindert, dass der Strömungs-Istwert einen vorgegebenen Maximalwert überschreitet. Dadurch wird ein Leistungsbedarf der Klimaanlage minimiert.. Die Regelungseinheit regelt sowohl die Außenluftklappeneinheit als auch die Umluftklappeneinheit stufenlos und unabhängig voneinander und stellt ein an einen Fahrbetrieb angepasstes gewünschtes Mischungsverhältnis zwischen dem Außenluftstrom und dem Umluftstrom her. Das Mischungsverhältnis ist somit variabel.

Gemäß einer bevorzugten Durchführung des erfindungsgemäßen Verfahrens werden mindestens ein Außenluftstrom mittels der Außenluftklappeneinheit und mindestens ein Umluftstrom mittels der Umluftklappeneinheit nach Bedarf eingestellt und erzeugen in jedem gewünschten Mischungsverhältnis den Mischluftstrom, einschließlich dem Fall, dass ein Mischungsanteil des Außenluftstroms oder des Umluftstroms gleich Null ist. Das Mischungsverhältnis kann somit vorteilhaft an jede Geschwindigkeit des Fahrzeugs und damit in Verbindung stehende Außendruckverhältnisse zwischen einer Außenluftansaugung und einem Fortluftaustritt angepasst werden. Außerdem kann das Mischungsverhältnis an jede klimatische Gegebenheit außerhalb und innerhalb des Fahrzeugs angepasst werden.

In einer zweckmäßigen Ausführung der Erfindung wird der erste Öffnungsgrad der Außenluftklappe erhöht, wenn der Strömungs-Istwert für den Außenluftstrom unter einem erforderlichen Strömungs-Sollwert liegt, bis der erforderliche Strömungs-Sollwert wieder erreicht wird. Der zweite Öffnungsgrad der Umluftklappe wird verringert und/oder eine Drehzahl einer Zuluftventilatoreinheit des Klimagerätes wird erhöht. Auf diese Weise wird der Strömungs-Istwert im Außenluftkanal erhöht, so dass der Minimalwert eingehalten wird. Der Öffnungsgrad der Umluftklappeneinheit kann auch Null betragen, d.h. die Umluftklappeneinheit wird vollständig geschlossen (reiner Außenluftbetrieb).

In einer weiteren zweckmäßigen Ausführung der Erfindung wird der erste Öffnungsgrad der Außenluftklappeneinheit verringert, wenn der Strömungs-Istwert für den Außenluftstrom über dem erforderlichen Strömungs-Sollwert liegt, bis der erforderliche Strömungs-Sollwert wieder erreicht wird. Der zweite Öffnungsgrad der Umluftklappeneinheit wird erhöht und/oder die Drehzahl der Zuluftventilatoreinheit wird verringert. Auf diese Weise wird der Strömungs-Istwert im Außenluftkanal verringert, so dass der Strömungs-Istwert unterhalb des Maximalwerts bleibt. Der Öffnungsgrad der Außenluftklappeneinheit kann auch Null betragen, d.h. die Außenluftklappeneinheit wird vollständig geschlossen (reiner Umluftbetrieb).

In einer speziellen Weiterbildung der Erfindung regelt die Regelungseinheit die Drehzahl der Zuluftventilatoreinheit unabhängig von der Außenluftklappeneinheit und der Umluftklappeneinheit. Dies bietet den Vorteil, dass eine Ansaugmenge des Mischluftstroms unabhängig von dem Mischungsverhältnis zwischen dem Außenluftstrom und dem Umluftstrom eingestellt werden kann. Dadurch werden die Einstellmöglichkeiten der Klimaanlage erweitert.

Speziell kann die Regelungseinheit die Drehzahl der Zuluftventilatoreinheit in Stufen oder stufenlos regeln. Es können also verschiedene Regelungsarten gewählt werden.

Weiterhin kann die Regelungseinheit die Drehzahl der Zuluftventilatoreinheit in Abhängigkeit von einer Außentemperatur, einer Umlufttemperatur und/oder einer Raumtemperatur in einem zu klimatisierenden Raum einstellen. Dies stellt eine vorteilhafte Art einer Regelung der Drehzahl dar.

Weiterhin besteht die Lösung der Aufgabe in einer Klimaanlage für ein Fahrzeug zur Durchführung des erfindungsgemäßen Verfahrens, die das Klimagerät umfasst und bei der die Außenluftklappeneinheit zwischen dem Außenluftkanal und mindestens einem Mischluftkanal und die Umluftklappeneinheit zwischen mindestens einem Umluftkanal und dem Mischluftkanal angeordnet sind, wobei mindestens eine Regelungseinheit mit mindestens einem Strömungssensor im Außenluftkanal und mindestens einer stufenlosen ersten Einstelleinrichtung für die Außenluftklappeneinheit gekoppelt ist. Die Regelungseinheit ist mit mindestens einer zweiten stufenlosen Einstelleinrichtung für die Umluftklappeneinheit gekoppelt, und es ist jede Kombination von einem beliebigen ersten Öffnungsgrad der Außenluftklappeneinheit und einem beliebigen zweiten Öffnungsgrad der Umluftklappeneinheit einstellbar, und die getrennten Einstelleinrichtungen für den ersten Öffnungsgrad und den zweiten Öffnungsgrad erlauben eine getrennte Einstellung des Außenluftstroms und des Umluftstroms. Der Strömungssensor misst einen Strömungs-Istwert im Außenluftkanal, und die Regelungseinheit ermittelt anhand des Strömungs-Istwertes einen benötigten ersten Öffnungsgrad der Außenluftklappeneinheit. Die Regelungseinheit ermittelt anhand des Strömungs-Istwertes auch einen benötigten zweiten Öffnungsgrad der Umluftklappeneinheit.

Der Vorteil der Klimaanlage besteht darin, dass diese die Durchführung des erfindungsgemäßen Verfahrens ermöglicht. Die getrennten Einstelleinrichtungen für den ersten Öffnungsgrad und den zweiten Öffnungsgrad erlauben eine getrennte Einstellung des Außenluftstroms und des Umluftstroms. Dadurch kann verhindert werden, dass bei ungünstigen Betriebsbedingungen bzw. Druckverhältnissen der Strömungs-Istwert unter den erforderlichen Minimalwert abfällt oder über den Maximalwert ansteigt. Zudem kann ein beliebiges gewünschtes Mischungsverhältnis zwischen dem Außenluftstrom und dem Umluftstrom eingestellt werden.

Vorzugsweise ist der Strömungssensor ein Massenstromsensor, ein Volumenstromsensor oder ein Differenzdrucksensor. Diese Art von Sensoren ist besonders gut geeignet, um den Strömungs-Istwert im Außenluftkanal zu ermitteln. Es können jedoch auch andere Strömungssensoren verwendet werden.

Außerdem kann der Strömungssensor an einer Position im Außenluftkanal angeordnet sein, wobei die Position des Strömungssensors an jeder Stelle zwischen einer Außenöffnung des Außenluftkanals und der Außenluftklappeneinheit sowie an einer Wand oder in einem Innenraum des Außenluftkanals festlegbar ist. Somit kann die Position des Strömungssensors an jeder Stelle zwischen einer Außenöffnung des Außenluftkanals und der Außenluftklappeneinheit sowie an einer Wand oder in einem Innenraum des Außenluftkanals festgelegt werden.

Weiterhin kann der Außenluftkanal mindestens eine Rückschlagklappe aufweisen. Dies ist eine zusätzliche Maßnahme um bei extremen Druckdifferenzen zwischen den Öffnungen für die Außenluftansaugung und den Fortluftaustritt einen vollständigen oder teilweisen Austritt des Umluftstroms aus dem Fahrzeug zu verhindern.

Alternativ zu der Rückschlagklappe können mindestens zwei Drucksensoren zur Ermittlung einer Strömungsrichtung im Außenluftkanal angeordnet sein. Mit Hilfe der Drucksensoren kann die Strömungsrichtung eines Luftstromes im Außenluftkanal festgestellt werden. Weist dieser Luftstrom nach außen, d.h. aus dem Fahrzeug heraus, kann durch ein Verstellen der Außenluftklappeneinheit und der Umluftklappeneinheit der Luftstrom so eingestellt werden, dass der Strömungs-Istwert wieder den Minimalwert erreicht und einhält und die Strömungsrichtung in das Fahrzeug hinein weist.

Zusätzlich kann der Außenluftkanal mindestens ein Ansauggitter aufweisen. Dadurch wird der Außenluftstrom vorgereinigt.

Beansprucht wird außerdem ein Fahrzeug, insbesondere ein Schienenfahrzeug, mit der erfindungsgemäßen Klimaanlage.

Im Folgenden wird ein Ausführungsbeispiel der Erfindung anhand von einer einzigen Figur näher erläutert. Es zeigen:

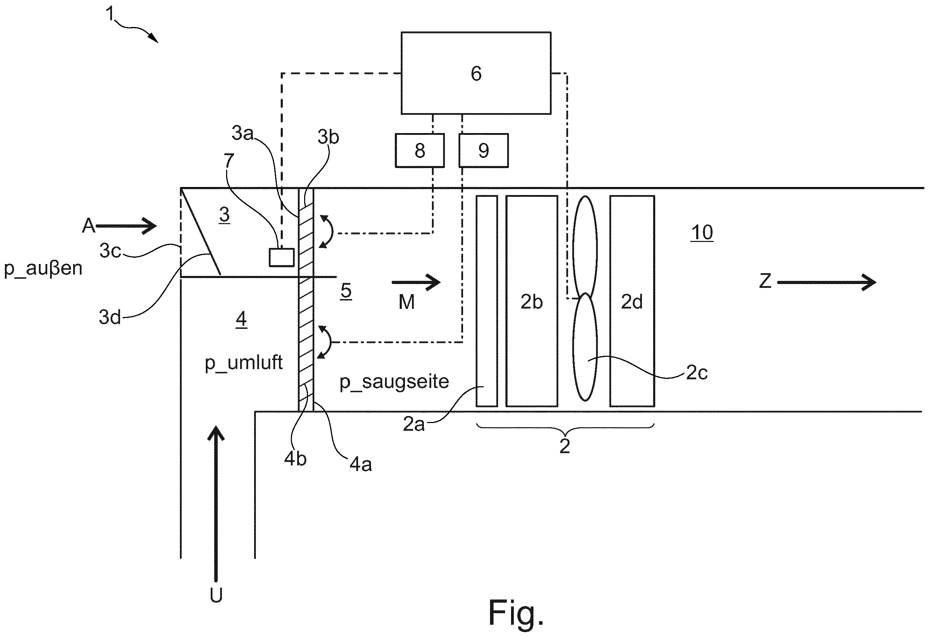

- Fig. 1: eine schematische Schnittansicht einer erfindungsgemäßen Klimaanlage.

Die Figur zeigt eine schematische Schnittansicht einer Klimaanlage 1 für ein ansonsten nicht weiter dargestelltes Schienenfahrzeug. Die Klimaanlage 1 umfasst ein Klimagerät 2, einen Außenluftkanal 3, einen Umluftkanal 4, einen Mischluftkanal 5 und einen Zuluftkanal 10. Außerdem weist die Klimaanlage 1 eine Regelungseinheit 6 auf.

Der Außenluftkanal 3 grenzt an eine Außenluftklappeneinheit 3a mit einer Vielzahl von ersten Lamellen 3b sowie an ein Ansauggitter 3c an. Weiterhin kann der Außenluftkanal 3 mit einer Rückschlagklappe 3d am Ansauggitter 3c versehen sein. Die Außenluftklappeneinheit 3a ist zwischen dem Außenluftkanal 3 und dem Mischluftkanal 5 angeordnet. Das Ansauggitter 3c befindet sich zwischen einer äußeren Umgebung des Schienenfahrzeugs und dem Außenluftkanal 3.

Der Umluftkanal 4 beginnt in einem nicht dargestellten zu klimatisierenden Raum und endet an einer Umluftklappeneinheit 4a mit einer Vielzahl von zweiten Lamellen 4b. Die Umluftklappeneinheit 4a ist zwischen dem Umluftkanal 4 und dem Mischluftkanal 5 angeordnet.

Der Mischluftkanal 5 verläuft von der Außenluftklappeneinheit 3a und der Umluftklappeneinheit 4a bis zum Klimagerät 2.

Das Klimagerät 2 umfasst eine Filtereinheit 2a, eine Verdampfereinheit 2b, eine Zuluftventilatoreinheit 2c und eine Heizeinheit 2d, die in der genannten Reihenfolge zwischen dem Mischluftkanal 5 und dem Zuluftkanal 10 angeordnet sind. Die Reihenfolge kann jedoch auch anders gewählt werden. Die Heizeinheit 2d ist auch zum Kühlen geeignet. Der Zuluftkanal 10 mündet in den zu klimatisierenden Raum.

Die Regelungseinheit 6 ist signaltechnisch mit einem Strömungssensor 7 verbunden, der an einer beliebigen Position im Außenluftkanal 3 angeordnet ist. Es können auch mehrere Strömungssensoren 7 im Außenluftkanal 3 angeordnet sein. Es kann auch mindestens ein Strömungssensor 7 im Umluftkanal 4 angeordnet sein. Weiterhin ist die Regelungseinheit signaltechnisch mit einer ersten Einstelleinrichtung 8 und einer zweiten Einstelleinrichtung 9 verbunden. Die erste Einstelleinrichtung 8 ist stufenlos verstellbar und regelungstechnisch mit den ersten Lamellen 3b der Außenluftklappeneinheit 3a verbunden. Die zweite Einstelleinrichtung 9 ist stufenlos verstellbar und regelungstechnisch mit den zweiten Lamellen 4b der Umluftklappeneinheit 4a verbunden. Die Regelungseinheit 6 kann außerdem mit einer in der Figur nicht dargestellten Drehzahlregelungseinrichtung der Zuluftventilatoreinheit 2c regelungstechnisch verbunden sein.

Im Betrieb befinden sich ein Außenluftstrom A im Außenluftkanal 3, ein Umluftstrom U im Umluftkanal 4, ein Mischluftstrom M im Mischluftkanal 5 und ein Zuluftstrom Z im Zuluftkanal 10. Im Außenluftkanal 3 misst der Strömungssensor 7 einen Strömungs-Istwert. Der Strömungs-Istwert kann ein Massenstrom, ein Volumenstrom oder eine Druckdifferenz sein. Weitere Arten von Strömungs-Istwerten sind ebenfalls möglich. Der Strömungs-Istwert wird an die Regelungseinheit 6 weitergegeben. Die Regelungseinheit 6 ermittelt anhand des Strömungs-Istwertes einen benötigten ersten Öffnungsgrad der Außenluftklappeneinheit 3a, einen benötigten zweiten Öffnungsgrad der Umluftklappeneinheit 4a und gegebenenfalls einen benötigten Drehzahlwert für die Zuluftventilatoreinheit 2c. Anschließend gibt die Regelungseinheit 6 entsprechende Regelungssignale an die erste Einstelleinrichtung 8, die zweite Einstelleinrichtung 9 und gegebenenfalls an die Drehzahlregelungseinrichtung der Zuluftventilatoreinheit 2c.

Durch eine Veränderung des ersten Öffnungsgrades der Außenluftklappeneinheit 3a wird die in den Mischluftkanal 5 einströmende Größe des Außenluftstromes A eingestellt. Durch eine Veränderung des zweiten Öffnungsgrades der Umluftklappeneinheit 4a wird die in den Mischluftkanal 5 einströmende Größe des Umluftstromes U eingestellt. Durch die Drehzahlregelung der Zuluftventilatoreinheit 2c kann außerdem eine Ansaugmenge des Mischluftstromes M eingestellt werden. Die Zuluftventilatoreinheit 2c kann stufenlos oder in Stufen angesteuert werden. Die Einstellungen erfolgen jeweils in Abhängigkeit von Klimatisierungsanforderungen während eines Fahrbetriebs des Schienenfahrzeugs.

Ein Druck im Außenluftkanal 3 wird von einem Umgebungsdruck bzw. Außendruck p_außen außerhalb des Schienenfahrzeugs beeinflusst. Aufgrund von Druckdifferenzen zwischen dem Außenluftkanal 3 bzw. dem Umluftkanal 4 mit einem Druck p_Umluft und dem Mischluftkanal 5 mit einem Druck p_Saugseite ergibt sich normalerweise ein Außenluftstrom A zum Klimagerät 2 hin. Im Außenluftkanal 3 kann sich im Fahrbetrieb ein Überdruck oder ein Unterdruck befinden.

Liegt der Strömungs-Istwert für den Außenluftstrom A unter einem erforderlichen Strömungs-Sollwert, wird der erste Öffnungsgrad der Außenluftklappeneinheit 3a erhöht bis der erforderliche Strömungs-Sollwert wieder erreicht wird. Es ist möglich, zusätzlich den zweiten Öffnungsgrad der Umluftklappeneinheit 4a zu verringern und/oder die Drehzahl der Zuluftventilatoreinheit 2c zu erhöhen.

Liegt der Strömungs-Istwert für den Außenluftstrom A über dem erforderlichen Strömungs-Sollwert, wird der erste Öffnungsgrad der Außenluftklappeneinheit 3a verringert bis der erforderliche Strömungs-Sollwert wieder erreicht wird. Es ist möglich, zusätzlich den zweiten Öffnungsgrad der Umluftklappeneinheit 4a zu erhöhen und/oder die Drehzahl der Zuluftventilatoreinheit 2c zu verringern.

Die Außenluftklappeneinheit 3a, die Umluftklappeneinheit 4a und die Zuluftventilatoreinheit 2c können grundsätzlich unabhängig voneinander geregelt werden. Zugehörige Regelungswerte stehen nicht unbedingt in einem bestimmten Verhältnis zu einander.

Der Strömungs-Sollwert ist vorgegeben und liegt in einem Bereich von einem Minimalwert bis zu einem Maximalwert. Normalerweise entspricht der Strömungs-Sollwert dem Minimalwert. Bei Unterschreiten des Minimalwerts verschlechtert sich die Raumluftqualität im zu klimatisierenden Raum deutlich. Bei Überschreiten des Maximalwerts ist ein höherer Energiebedarf zur Klimatisierung des Außenluftstroms A erforderlich. Der Minimalwert, der Maximalwert und der Strömungs-Sollwert können jeweils Toleranzen aufweisen.

Die Rückschlagklappe 3d kann verhindern, dass eine Rückströmung im Außenluftkanal 3 entsteht bzw. zumindest ein Teil des Umluftstroms U entweicht. Es wird also eine Rückströmung im Außenluftkanal 3 bzw. ein Entweichen von zumindest einem Teil des Umluftstroms U durch den Außenluftkanal 3 verhindert. Alternativ zur Rückschlagklappe können im Außenluftkanal mindestens zwei voneinander unabhängige Drucksensoren angeordnet sein (in der Figur nicht dargestellt), die ebenfalls signaltechnisch mit der Regelungseinheit 6 gekoppelt sind. Mit Hilfe dieser beiden Drucksensoren kann eine Strömungsrichtung im Außenluftkanal 3 ermittelt werden. Wenn die Strömungsrichtung im Außenluftkanal 3 nach außen, d.h. in Richtung zur Umgebung des Schienenfahrzeugs, verläuft, kann die Regelungseinheit 6 die Umluftklappeneinheit 4a androsseln, um den Außenluftstrom A wieder auf den Strömungs-Sollwert und in die erforderliche Strömungsrichtung, d.h. in das Fahrzeug hinein, zu regeln.

Zu einer Regelung von klimatischen Bedingungen in dem zu klimatisierenden Raum können zusätzlich zum Strömungssensor 7 weitere Sensoren vorhanden sein, z.B. Temperatursensoren. Das Ansauggitter 3c dient zur Vorreinigung von Luft, die von außen in den Außenluftkanal 3 eintritt.

Es ist möglich, bestehende Klimaanlagen nachzurüsten, um das erfindungsgemäße Verfahren durchzuführen.

### Bezugszeichenliste

- 1: Klimaanlage
- 2: Klimagerät
- 2a: Filtereinheit
- 2b: Verdampfereinheit
- 2c: Zuluftventilatoreinheit
- 2d: Heizeinheit
- 3: Außenluftkanal
- 3a: Außenluftklappeneinheit
- 3b: Erste Lamellen
- 3c: Ansauggitter
- 3d: Rückschlagklappe
- 4: Umluftkanal
- 4a: Umluftklappeneinheit
- 4b: Zweite Lamellen
- 5: Mischluftkanal
- 6: Regelungseinheit
- 7: Strömungssensor
- 8: Erste Einstelleinrichtung
- 9: Zweite Einstelleinrichtung
- 10: Zuluftkanal

- A: Außenluftstrom
- U: Umluftstrom
- M: Mischluftstrom
- Z: Zuluftstrom
- p_außen: Außendruck
- p_umluft: Druck im Umluftkanal
- p_saugseite: Druck im Mischluftkanal

## Patentansprüche

1. Verfahren zur Regelung einer Klimaanlage (1) für ein Fahrzeug,
- bei dem mindestens ein Mischluftstrom (M) in mindestens ein Klimagerät (2) einströmt, wobei sich der Mischluftstrom (M) in einem Mischluftkanal (5) befindet, und
- mindestens ein Zuluftstrom (Z) aus dem Klimagerät (2) ausströmt,
- wobei mindestens ein Strömungs-Istwert in mindestens einem Außenluftkanal (3) ermittelt wird und
- mindestens eine Regelungseinheit (6) in Abhängigkeit von dem Strömungs-Istwert mindestens einen ersten Öffnungsgrad für mindestens eine Außenluftklappeneinheit (3a) stufenlos einstellt,
- wobei durch eine Veränderung des ersten Öffnungsgrads der Außenluftklappeneinheit (3a) die in den Mischluftkanal (5) einströmende Größe des Außenluftstroms (A) eingestellt wird,
**dadurch gekennzeichnet, dass**
- die Regelungseinheit mindestens einen zweiten Öffnungsgrad für mindestens eine Umluftklappeneinheit (4a) unabhängig von dem ersten Öffnungsgrad einstellt,
- wobei durch eine Veränderung des zweiten Öffnungsgrads der Umluftklappeneinheit (4a) die in den Mischluftkanal (5) einströmende Größe des Umluftstromes (U) eingestellt wird,
- die Regelungseinheit (6) auch den zweiten Öffnungsgrad für die Umluftklappeneinheit (4a) in Abhängigkeit von dem Strömungs-Istwert stufenlos einstellt und
- mindestens eine Kombination eines ersten Öffnungsgrades mit einem zweiten Öffnungsgrad einen Strömungs-Istwert im Außenluftkanal herstellt, der einem vorgegebenen Strömungs-Sollwert des Außenluftstroms (A) entspricht.

2. Verfahren nach Anspruch 1, **dadurch gekennzeichnet, dass** mindestens ein Außenluftstrom (A) mittels der Außenluftklappeneinheit (3a) und mindestens ein Umluftstrom (U) mittels der Umluftklappeneinheit (4a) nach Bedarf eingestellt werden und in jedem gewünschten Mischungsverhältnis den Mischluftstrom (M) erzeugen.

3. Verfahren nach Anspruch 1 oder 2, **dadurch gekennzeichnet, dass** der erste Öffnungsgrad der Außenluftklappeneinheit (3a) erhöht wird, wenn der Strömungs-Istwert für den Außenluftstrom (A) unter einem erforderlichen Strömungs-Sollwert liegt, bis der erforderliche Strömungs-Sollwert wieder erreicht wird.

4. Verfahren nach Anspruch 3, **dadurch gekennzeichnet, dass** der zweite Öffnungsgrad der Umluftklappeneinheit (4a) verringert und/oder eine Drehzahl einer Zuluftventilatoreinheit (2c) des Klimagerätes (2) erhöht wird.

5. Verfahren nach Anspruch 1 oder 2, **dadurch gekennzeichnet, dass** der erste Öffnungsgrad der Außenluftklappeneinheit (3a) verringert wird, wenn der Strömungs-Istwert für den Außenluftstrom (A) über dem erforderlichen Strömungs-Sollwert liegt, bis der erforderliche Strömungs-Sollwert wieder erreicht wird.

6. Verfahren nach Anspruch 5, **dadurch gekennzeichnet, dass** der zweite Öffnungsgrad der Umluftklappeneinheit (4a) erhöht und/oder die Drehzahl der Zuluftventilatoreinheit (2c) verringert wird.

7. Verfahren nach Anspruch 4 oder 6, **dadurch gekennzeichnet, dass** die Regelungseinheit (6) die Drehzahl der Zuluftventilatoreinheit (2c) unabhängig von der Außenluftklappeneinheit (3a) und der Umluftklappeneinheit (4a) regelt.

8. Verfahren nach Anspruch 4, 6 oder 7, **dadurch gekennzeichnet, dass** die Regelungseinheit (6) die Drehzahl der Zuluftventilatoreinheit (2c) in Stufen oder stufenlos regelt.

9. Verfahren nach Anspruch 4, 6, 7 oder 8, **dadurch gekennzeichnet, dass** die Regelungseinheit (6) die Drehzahl der Zuluftventilatoreinheit (2c) in Abhängigkeit von einer Außentemperatur, einer Umlufttemperatur und/oder einer Raumtemperatur in einem zu klimatisierenden Raum einstellt.

10. Klimaanlage (1) für ein Fahrzeug zur Durchführung des Verfahrens nach einem der Ansprüche 1 bis 9,
- die das Klimagerät (2) umfasst und
- bei der die Außenluftklappeneinheit (3a) zwischen dem Außenluftkanal (3) und mindestens einem Mischluftkanal (5)
- und die Umluftklappeneinheit (4a) zwischen mindestens einem Umluftkanal (4) und dem Mischluftkanal (5) angeordnet sind,
- wobei mindestens eine Regelungseinheit (6) mit mindestens einem Strömungssensor (7) im Außenluftkanal (3) und mindestens einer stufenlosen ersten Einstelleinrichtung (8) für die Außenluftklappeneinheit (3a) gekoppelt ist,
- die Regelungseinheit (6) mit mindestens einer zweiten stufenlosen Einstelleinrichtung (9) für die Umluftklappeneinheit (4a) gekoppelt ist und,
- jede Kombination von einem beliebigen ersten Öffnungsgrad der Außenluftklappeneinheit (3a) und einem beliebigen zweiten Öffnungsgrad der Umluftklappeneinheit (4a) einstellbar ist und
- die getrennten Einstelleinrichtungen (8, 9) für den ersten Öffnungsgrad und den zweiten Öffnungsgrad eine getrennte Einstellung des Außenluftstroms (A) und des Umluftstroms (U) erlauben
- der Strömungssensor (7) einen Strömungs-Istwert im Außenluftkanal (3) misst und
- die Regelungseinheit (6) anhand des Strömungs-Istwertes einen benötigten ersten Öffnungsgrad der Außenluftklappeneinheit (3a) ermittelt,
**dadurch gekennzeichnet, dass**
- die Regelungseinheit (6) anhand des Strömungs-Istwertes auch einen benötigten zweiten Öffnungsgrad der Umluftklappeneinheit (4a) ermittelt.

11. Klimaanlage (1) nach Anspruch 10, **dadurch gekennzeichnet, dass** der Strömungssensor (7) ein Massenstromsensor, ein Volumenstromsensor oder ein Differenzdrucksensor ist.

12. Klimaanlage nach Anspruch 10 oder 11, **dadurch gekennzeichnet, dass** der Strömungssensor (7) an einer Position im Außenluftkanal (3) angeordnet ist, wobei die Position des Strömungssensors (7) an jeder Stelle zwischen einer Außenöffnung des Außenluftkanals (3) und der Außenluftklappeneinheit (3a) sowie an einer Wand oder in einem Innenraum des Außenluftkanals (3) festlegbar ist.

13. Klimaanlage nach einem der Ansprüche 10 bis 12, **dadurch gekennzeichnet, dass** der Außenluftkanal (3) mindestens eine Rückschlagklappe (3d) aufweist oder dass mindestens zwei Drucksensoren zur Ermittlung einer Strömungsrichtung im Außenluftkanal (3) angeordnet sind.

14. Klimaanlage nach einem der Ansprüche 10 bis 13, **dadurch gekennzeichnet, dass** der Außenluftkanal (3) mindestens ein Ansauggitter (3c) aufweist.

15. Fahrzeug, insbesondere ein Schienenfahrzeug, mit einer Klimaanlage (1) nach einem der Ansprüche 10 bis 14.

## Claims

1. A method of controlling an air conditioning system (1) for a vehicle,
- in which at least one mixed air flow (M) flows into at least one air-conditioning unit (2), the mixed air flow (M) being located in a mixed air duct (5), and
- at least one supply air flow (Z) flows out of the air conditioning unit (2),
- wherein at least one actual flow value is determined in at least one fresh air duct (3), and
- at least one control unit (6) continuously adjusts at least one first level of opening for at least one external air shutter unit (3a) depending on the actual flow value,
- wherein the quantity of the fresh air flow (A) flowing into the mixed air duct (5) is adjusted by changing the first opening level of the fresh air shutter unit (3a),
**characterised in that**
- the control unit sets at least a second level of opening for at least one recirculation shutter unit (4a) independently of the first level of opening,
- wherein the quantity of the circulating air flow (U) flowing into the mixed air duct (5) is adjusted by changing the second opening level of the circulating air shutter unit (4a),
- the control unit (6) also continuously adjusts the second level of opening for the circulating air shutter unit (4a) dependent on the actual flow value and
- at least one combination of a first opening level with a second opening level provides an actual flow value in the fresh air duct which corresponds to a predetermined flow setpoint value of the fresh air flow (A).

2. The method according to claim 1, **characterized in that** at least one fresh air flow (A) by means of the fresh air shutter unit (3a) and at least one circulating air flow (U) by means of the circulating air shutter unit (4a) are adjusted as desired and generate the mixed air flow (M) in any desired mixing ratio.

3. The method according to claim 1 or 2, **characterised in that** the first level of opening of the external air shutter unit (3a) is increased when the actual flow value for the fresh air flow (A) is below a required flow setpoint value until the required flow setpoint value is reached again.

4. The method according to claim 3, **characterized in that** the second level of opening of the recirculation air shutter unit (4a) is reduced and/or a speed of a supply air fan unit (2c) of the air conditioning unit (2) is increased.

5. The method according to claim 1 or 2, **characterized in that** the first level of opening of the external air shutter unit (3a) is reduced when the actual flow value for the fresh air flow (A) is above the desired flow value until the desired flow value is obtained.

6. The method according to claim 5, **characterized in that** the second level of opening of the recirculation air shutter unit (4a) is increased and/or the speed of the supply air fan unit (2c) is reduced.

7. The method according to claim 4 or 6, **characterized in that** the control unit (6) controls the speed of the supply air fan unit (2c) independently from the external air shutter unit (3a) and the circulating air shutter unit (4a).

8. The method according to claim 4, 6 or 7, **characterized in that** the control unit (6) controls the rotational speed of the supply air fan unit (2c) in steps or continuously.

9. The method according to claim 4, 6, 7 or 8, **characterized in that** the control unit (6) adjusts the rotational speed of the supply air fan unit (2c) depending on an outside temperature, a circulating air temperature and/or a room temperature in a room to be air-conditioned.

10. An air conditioning system (1) for a vehicle for carrying out the method according to one of the claims 1 to 9,
- the air conditioning system (1) comprising the air conditioning unit (2),
- wherein the fresh air shutter unit (3a) is arranged between the fresh air duct (3) and at least one mixed air duct (5), and
- wherein the recirculating air shutter unit (4a) is arranged between at least one recirculating air duct (4) and the mixed air duct (5),
- wherein at least one control unit (6) is coupled to at least one flow sensor (7) in the fresh air duct (3) and to at least one first continuously adjusting device (8) for the fresh air shutter unit (3a),
- the control unit (6) is coupled to at least one second continuously adjusting device (9) for the circulating air shutter unit (4a) and,
- wherein any combination of any first opening level of the fresh air shutter unit (3a) and any second opening level of the recirculation shutter unit (4a) can be adjusted,
- wherein the adjusting devices (8, 9) for the first level of opening and the second level of opening allow separate adjustment of the fresh air flow (A) and the circulating air flow (U),
- wherein the flow sensor (7) measures an actual flow value in the fresh air duct (3), and
- the control unit (6) uses the actual flow value to determine a required first level of opening of the fresh air shutter unit (3a),
**characterised in that**
- the control unit (6) also calculates the required flow rate based on the actual flow value.

11. The air conditioning system (1) according to claim 10, **characterized in that** the flow sensor (7) is a mass flow sensor, a volume flow sensor or a differential pressure sensor.

12. The air conditioning system (1) according to claim 10 or 11, **characterized in that** the flow sensor (7) is arranged at a position in the fresh air duct (3), wherein the position of the flow sensor (7) can be determined at any position between an outside opening of the fresh air duct (3) and the fresh air shutter unit (3a) and on a wall or in an interior of the fresh air duct (3).

13. The air conditioning system (1) according to one of claims 10 to 12, **characterised in that** the fresh air duct (3) has at least one non-return shutter (3d) or **in that** at least two pressure sensors for determining a flow direction are arranged in the fresh air duct (3).

14. The air conditioning system (1) according to one of claims 10 to 13, **characterised in that** the fresh air duct (3) has at least one intake grid (3c).

15. A vehicle, in particular a rail vehicle, comprising an air conditioning system (1) according to one of the claims 10 to 14.

## Revendications

1. Procédé de régulation d'une installation de climatisation (1) pour un véhicule,
- où au moins un flux d'air mixte (M) afflue dans au moins un appareil de climatisation (2), dans lequel le flux d'air mixte (M) se trouve dans un canal d'air mixte (5), et
- au moins un flux d'air entrant (Z) sort de l'appareil de climatisation (2),
- dans lequel au moins une valeur réelle d'écoulement est déterminée dans au moins un canal d'air extérieur (3), et
- au moins une unité de régulation (6) règle continument au moins un premier degré d'ouverture pour au moins une unité de clapet d'air extérieur (3a) en fonction de la valeur réelle d'écoulement,
- dans lequel la taille, affluant dans le canal d'air mixte (5), du flux d'air extérieur (A) est réglée par une modification du premier degré d'ouverture de l'unité de clapet d'air extérieur (3a),
**caractérisé en ce que**
- l'unité de régulation règle au moins un deuxième degré d'ouverture pour au moins une unité de clapet d'air recyclé (4) indépendamment du premier degré d'ouverture,
- dans lequel la taille, affluant dans le canal d'air mixte (5), du flux d'air recyclé (U) est réglée par une modification du deuxième degré d'ouverture de l'unité de clapet d'air recyclé (4a),
- l'unité de régulation (6) règle continument également le deuxième degré d'ouverture pour l'unité de clapet d'air recyclé (4a) en fonction de la valeur réelle d'écoulement, et
- au moins une combinaison d'un premier degré d'ouverture à un deuxième degré d'ouverture produit une valeur réelle d'écoulement dans le canal d'air extérieur, qui correspond à une valeur cible d'écoulement spécifiée du flux d'air extérieur (A).

2. Procédé selon la revendication 1, **caractérisé en ce qu'**au moins un flux d'air extérieur (A) et au moins un flux d'air recyclé (U) sont réglés selon les besoins respectivement au moyen de l'unité de clapet d'air extérieur (3a) et au moyen de l'unité de clapet d'air recyclé (4a) et génèrent, dans chaque rapport de mélange souhaité, le flux d'air mixte (M).

3. Procédé selon la revendication 1 ou 2, **caractérisé en ce que** le premier degré d'ouverture de l'unité de clapet d'air extérieur (3a) est augmenté quand la valeur réelle d'écoulement pour le flux d'air extérieur (A) est inférieure à une valeur cible d'écoulement requise jusqu'à ce que la valeur cible d'écoulement requise soit à nouveau atteinte.

4. Procédé selon la revendication 3, **caractérisé en ce que** le deuxième degré d'ouverture de l'unité de clapet d'air recyclé (4a) est réduit et/ou une vitesse de rotation d'une unité de ventilateur d'air entrant (2c) de l'appareil de climatisation (2) est augmentée.

5. Procédé selon la revendication 1 ou 2, **caractérisé en ce que** le premier degré d'ouverture de l'unité de clapet d'air extérieur (3a) est réduit quand la valeur réelle d'écoulement pour le flux d'air extérieur (A) est supérieure à la valeur cible d'écoulement requise jusqu'à ce que la valeur cible d'écoulement requise soit à nouveau atteinte.

6. Procédé selon la revendication 5, **caractérisé en ce que** le deuxième degré d'ouverture de l'unité de clapet d'air recyclé (4a) est augmenté et/ou la vitesse de rotation de l'unité de ventilateur d'air entrant (2c) est réduite.

7. Procédé selon la revendication 4 ou 6, **caractérisé en ce que** l'unité de régulation (6) règle la vitesse de rotation de l'unité de ventilateur d'air entrant (2c) indépendamment de l'unité de clapet d'air extérieur (3a) et de l'unité de clapet d'air recyclé (4a).

8. Procédé selon la revendication 4, 6 ou 7, **caractérisé en ce que** l'unité de régulation (6) règle par paliers ou continument la vitesse de rotation de l'unité de ventilateur d'air entrant (2c).

9. Procédé selon la revendication 4, 6, 7 ou 8, **caractérisé en ce que** l'unité de régulation (6) règle la vitesse de rotation de l'unité de ventilateur d'air entrant (2c) en fonction d'une température extérieure, d'une température d'air recyclé et/ou d'une température ambiante dans une pièce à climatiser.

10. Installation de climatisation (1) pour un véhicule servant à mettre en œuvre le procédé selon l'une quelconque des revendications 1 à 9,
- qui comprend l'appareil de climatisation (2) et
- où l'unité de clapet d'air extérieur (3a) est disposée entre le canal d'air extérieur (3) et au moins un canal d'air mixte (5)
- et l'unité de clapet d'air recyclé (4a) est disposée entre au moins un canal d'air recyclé (4) et le canal d'air mixte (5),
- dans laquelle au moins une unité de régulation (6) est couplée à au moins un capteur d'écoulement (7) dans le canal d'air extérieur (3) et à au moins un premier dispositif de réglage continu (8) pour l'unité de clapet d'air extérieur (3a),
- l'unité de régulation (6) est couplée à au moins un deuxième dispositif de réglage continu (9) pour l'unité de clapet d'air recyclé (4a), et
- chaque combinaison d'un premier degré d'ouverture quelconque de l'unité de clapet d'air extérieur (3a) et d'un deuxième degré d'ouverture quelconque de l'unité de clapet d'air recyclé (4a) peut être réglée, et
- les dispositifs de réglage (8, 9) séparés pour le premier degré d'ouverture et le deuxième degré d'ouverture permettent un réglage séparé du flux d'air extérieur (A) et du flux d'air recyclé (U),
- le capteur d'écoulement (7) mesure une valeur réelle d'écoulement dans le canal d'air extérieur (3) et
- l'unité de régulation (6) détermine à l'aide de la valeur réelle d'écoulement un premier degré d'ouverture nécessaire de l'unité de clapet d'air extérieur (3a),
**caractérisée en ce que**
- l'unité de régulation (6) détermine à l'aide de la valeur réelle d'écoulement également un deuxième degré d'ouverture nécessaire de l'unité de clapet d'air recyclé (4a).

11. Installation de climatisation (1) selon la revendication 10, **caractérisée en ce que** le capteur d'écoulement (7) est un capteur de flux massique, un capteur de flux volumique ou un capteur de pression différentielle.

12. Installation de climatisation selon la revendication 10 ou 11, **caractérisée en ce que** le capteur d'écoulement (7) est disposé au niveau d'une position dans le canal d'air extérieur (3), dans laquelle la position du capteur d'écoulement (7) peut être fixée au niveau de chaque emplacement entre une ouverture extérieure du canal d'air extérieur (3) et de l'unité de clapet d'air extérieur (3a) ainsi qu'au niveau d'une paroi ou dans un espace intérieur du canal d'air extérieur (3).

13. Installation de climatisation selon l'une quelconque des revendications 10 à 12, **caractérisée en ce que** le canal d'air extérieur (3) présente au moins un clapet anti-retour (3d) ou qu'au moins deux capteurs de pression servant à déterminer une direction d'écoulement sont disposés dans le canal d'air extérieur (3).

14. Installation de climatisation selon l'une quelconque des revendications 10 à 13, **caractérisée en ce que** le canal d'air extérieur (3) présente au moins une grille d'aspiration (3c).

15. Véhicule, en particulier véhicule sur rails, avec une installation de climatisation (1) selon l'une quelconque des revendications 10 à 14.
